# EUROPÄISCHE PATENTANMELDUNG

(11) **EP 4 647 287 A1**
(43) Veröffentlichungstag der Anmeldung: **12.11.2025**
(21) Anmeldenummer: 25171742.7
(22) Anmeldetag: 22.04.2025
(51) Int. Cl.: B60L 53/30, B60L 53/66, B60L 53/63, B60L 53/67, B60L 53/68

(54) **LADEADAPTER FÜR EINE LADESTATION FÜR EIN ELEKTRISCH ANTREIBBARES FAHRZEUG SOWIE VERFAHREN ZUM LADEN EINES ELEKTRISCH ANTREIBBAREN FAHRZEUGS**

(30) Priorität: 06.05.2024 DE 102024112676
(71) Anmelder: Hochschule Koblenz, 56075 Koblenz (DE)
(72) Erfinder: Prof. Dr. Gnasa, Udo, 56218 Mülheim-Kärlich (DE); Funk, Daniel, 56566 Neuwied (DE); Bär, Micha, 69126 Heidelberg (DE); Klee, Marcel, 56626 Andernach (DE)
(74) Vertreter: Lohmanns Lohmanns & Partner mbB

(57) **Zusammenfassung**

Ladeadapter (20) für eine Ladestation (40) für ein elektrisch antreibbares Fahrzeug (50), aufweisend einen Eingangsanschlusspunkt (21) für Datensignale (22) und eingehende Energie (23), der elektrisch mit der Ladestation verbindbar ist, einen Ausgangsanschlusspunkt (24) für die Datensignale und ausgehende Energie (25), der elektrisch mit dem Fahrzeug verbindbar ist, eine Schalteinrichtung (26), die zwischen dem Eingangsanschlusspunkt und Ausgangsanschlusspunkt geschaltet ist und in einer geschlossenen Betriebsstellung einen Energiefluss von dem Eingangsanschlusspunkt zum Ausgangsanschlusspunkt zulässt und in einer geöffneten Betriebsstellung den Energiefluss zwischen dem Eingangsanschlusspunkt und Ausgangsanschlusspunkt unterbindet, eine mit der Schalteinrichtung gekoppelte Steuereinrichtung (27), die eine Datenübertragungsschnittstelle (28) zur Datenübertragung mit einem entfernten Gerät (30, 31, 32) und eine Signalübertragungsschnittstelle (33) zur Signalübertragung der Datensignale mit dem Eingangsanschlusspunkt und Ausgangsanschlusspunkt aufweist, wobei die Steuereinrichtung basierend auf über die Datenübertragungsschnittstelle empfangenen Daten (29) die Schalteinrichtung zwischen der geöffneten und geschlossenen Betriebsstellung umschaltet und bei geschlossener Betriebsstellung die Signalübertragung zulässt und bei geöffneter Betriebsstellung die Signalübertragung unterbindet und dem Eingangsanschlusspunkt und/oder Ausgangsanschlusspunkt fingierte Datensignale (34) überträgt; sowie Verfahren zum Laden eines elektrisch antreibbaren Fahrzeugs.

## Beschreibung

Die Erfindung betrifft einen Ladeadapter für eine Ladestation für ein elektrisch antreibbares Fahrzeug, insbesondere Kraftfahrzeug, sowie ein Verfahren zum Laden eines elektrisch antreibbaren Fahrzeugs, insbesondere Kraftfahrzeugs.

Elektrisch antreibbare Fahrzeuge (hierin auch allgemein als Elektrofahrzeuge, kurz EVs, bezeichnet), d. h. solche mit ausschließlich elektrischem Antrieb (sogenannte Batterie-Elektrofahrzeuge, kurz BEV) als auch solche mit gemischtem Antrieb (sogenannte Hybridfahrzeuge, kurz HEV) weisen einen Akkumulator (auch als Batterie bezeichnet) als elektrischen Energiespeicher auf.

Die Verbreitung und Nutzung von Elektrofahrzeugen haben in den letzten Jahren rapide zugenommen. Infolgedessen besteht ein zunehmender Bedarf, Elektrofahrzeuge bzw. deren Energiespeicher aufzuladen. Viele Besitzer von Elektrofahrzeugen verfügen über private Ladegeräte oder Ladestationen, um ihre Fahrzeuge zu Hause aufladen zu können, wenn sie sie nicht benutzen. Diese privaten Ladepunkte befinden sich oft auf oder in der Nähe von Einfahrten, ausgewiesenen Parkplätzen oder Garagen.

Für das Aufladen unterwegs gibt es auch öffentliche Ladestationen für Elektrofahrzeuge. Diese befinden sich oft in Einkaufszentren, Freizeiteinrichtungen, öffentlichen Parkplätzen und Tankstellen. Der Aufbau einer öffentlichen Ladeinfrastruktur in großem Umfang ist jedoch kostspielig und langsam, was zu der Sorge führt, dass der Ausbau der öffentlichen Ladeinfrastruktur nicht mit der raschen Verbreitung von Elektrofahrzeugen Schritt halten wird.

Es ist daher wünschenswert, auch private Ladestationen in eine öffentlich zugängliche Ladeinfrastruktur zu integrieren.

US 2024/0025275 A1 beschreibt beispielsweise einen Ladeadapter für ein Elektrofahrzeug, mit dem einem Nutzer ein Laden seines Elektrofahrzeugs an einer Ladestation von ihrem Eigentümer unter vorbestimmbaren Bedingungen ermöglicht werden soll. Beispielsweise können ein Ladezeitfenster, eine Ladedauer, Ladungsmenge und dergleichen, zu welchen der EV-Nutzer sein Fahrzeug an der Ladestation laden kann, durch den Eigentümer vorgegeben bzw. vom Nutzer angefordert sein.

Eine plötzliche Unterbrechung eines bereits begonnen Ladevorgangs, beispielsweise durch Unterbinden der Energieübertragung von der Ladestation zum Elektrofahrzeug, nachdem eine vorgegebene Ladungsmenge oder Ladedauer erreicht wurden oder ein vorgegebenes Ladezeitfenster überschritten wurde, kann unerwünschte Fehlerzustände mit entsprechenden Fehlermeldungen sowohl in der Ladestation als auch im Elektrofahrzeug zur Folge haben. Diese wiederum führen zu Irritationen beim Nutzer des Fahrzeugs und/oder Eigentümers der Ladestation und wirken sich negativ auf die Akzeptanz und Verbreitung derartiger Systeme aus.

Vor diesem Hintergrund liegt der Erfindung die Aufgabe zugrunde, einen Ladeadapter für eine Ladestation für ein elektrisch antreibbares Fahrzeug sowie ein Verfahren zum Laden eines elektrisch antreibbaren Fahrzeugs bereitzustellen, die einen Ladevorgang zuverlässig ermöglichen und Fehlerzustände im Fahrzeug und in der Ladestation vermeiden.

Diese Aufgabe wird durch einen Ladeadapter mit den Merkmalen des Anspruchs 1 sowie durch ein Verfahren mit den Merkmalen des Anspruchs 10 gelöst. Weitere besonders vorteilhafte Ausgestaltungen der Erfindung offen-baren die jeweiligen Unteransprüche.

Es sei angemerkt, dass die in den Ansprüchen einzeln aufgeführten Merk-male in beliebiger, technisch sinnvoller Weise miteinander kombiniert werden können (auch über Kategoriegrenzen, beispielsweise zwischen Verfahren und Vorrichtung, hinweg) und weitere Ausgestaltungen der Erfindung aufzeigen. Die Beschreibung charakterisiert und spezifiziert die Erfindung insbesondere im Zusammenhang mit den Figuren zusätzlich.

Es sei ferner angemerkt, dass eine hierin verwendete, zwischen zwei Merk-malen stehende und diese miteinander verknüpfende Konjunktion "und/oder" stets so auszulegen ist, dass in einer ersten Ausgestaltung des erfindungs-gemäßen Gegenstands lediglich das erste Merkmal vorhanden sein kann, in einer zweiten Ausgestaltung lediglich das zweite Merkmal vorhanden sein kann und in einer dritten Ausgestaltung sowohl das erste als auch das zweite Merkmal vorhanden sein können.

Gegenstand der Erfindung ist ein Ladeadapter für eine Ladestation (z. B. Wandladestation, Wallbox) für ein elektrisch antreibbares Fahrzeug, insbesondere Kraftfahrzeug (beispielsweise BEV oder HEV), der einen Eingangsanschlusspunkt für Datensignale und eingehende Energie, einen Ausgangsanschlusspunkt für die Datensignale und ausgehende Energie, eine Schalteinrichtung, die zwischen dem Eingangsanschlusspunkt und dem Ausgangsanschlusspunkt geschaltet ist, und eine mit der Schalteinrichtung gekoppelte Steuereinrichtung aufweist. Der Eingangsanschlusspunkt ist ausgebildet, elektrisch mit der Ladestation verbunden zu werden. Der Ausgangsanschlusspunkt ist ausgebildet, elektrisch mit dem Fahrzeug verbunden zu werden. Die Schalteinrichtung ist ausgebildet, in einer geschlossenen Betriebsstellung einen Energiefluss von dem Eingangsanschlusspunkt zum Ausgangsanschlusspunkt zuzulassen und in einer geöffneten Betriebsstellung den Energiefluss zwischen dem Eingangsanschlusspunkt und dem Ausgangsanschlusspunkt zu unterbinden. Weiterhin weist die Steuereinrichtung eine Datenübertragungsschnittstelle zur Datenübertragung mit einem entfernten Gerät und eine Signalübertragungsschnittstelle zur Signalübertragung der Datensignale mit dem Eingangsanschlusspunkt und dem Ausgangsanschlusspunkt auf. Die Steuereinrichtung ist ausgebildet, basierend auf über die Datenübertragungsschnittstelle empfangenen Daten die Schalteinrichtung zwischen der geöffneten Betriebsstellung und der geschlossenen Betriebsstellung umzuschalten und bei geschlossener Betriebsstellung die Signalübertragung der Datensignale zwischen dem Eingangsanschlusspunkt und dem Ausgangsanschlusspunkt über die Signalübertragungsschnittstelle zuzulassen und bei geöffneter Betriebsstellung die Signalübertragung der Datensignale zwischen dem Eingangsanschlusspunkt und dem Ausgangsanschlusspunkt zu unterbinden und mit dem Eingangsanschlusspunkt und/oder dem Ausgangsanschlusspunkt fingierte Datensignale zu übertragen.

Als entferntes Gerät ist ein Gerät zu verstehen, das nicht der Ladeadapter selbst ist. Entfernte Geräte in diesem Sinne sind z. B. ein Cloud-, Internet-, Daten-, Abrechnungs-Server, ein mobiles Endgerät wie z. B. Smartphone, Tablet, Laptop etc., eine Steuereinrichtung der Ladestation, eine Steuereinrichtung des zu ladenden Fahrzeugs u. ä. Das mobile Endgerät kann ein entferntes Gerät eines Nutzers des zu ladenden Fahrzeugs und/oder ein entferntes Gerät eines Eigentümers der Ladestation sein.

Der Begriff "Eigentümer" kann sich auf den Besitzer der Ladestation beziehen. Die Ladestation kann sich in Privatbesitz befinden, zum Beispiel auf einem privaten Grundstück, wie einem Haus, einer Einfahrt oder einer Garage.

Der Begriff "Nutzer" kann sich auf jeden Nutzer des Ladeadapters beziehen, der ein elektrisch antreibbares Fahrzeug mit dem Ladeadapter auflädt, der an einer Ladestation angeschlossen ist.

Die Datenübertragungsschnittstelle kann eine kabelgebundene oder drahtlose Übertragungsschnittstelle sein. Zum Beispiel kann die Datenübertragungsschnittstelle auf Übertragungsstandards wie beispielsweise LAN, WLAN, GSM (2G), LTE (4G), 5G, LoraWan, Zigbee u. ä. basieren.

Zur Datenübertragung können Kommunikationsprotokolle wie beispielsweise MQTT, HTTPS oder andere eingesetzt werden.

Als Datensignal ist ein Signal zu verstehen, das Informationen überträgt. Es kann beispielsweise in Form von elektrischer Spannung oder elektrischem Strom vorliegen. Die Informationen können im Datensignal in digital oder analog kodierter Form übertragen werden. Die Datensignale können beispielsweise einfache Handshake-Signale sein, pulsweitenmodulierte Signale, nach einem Busstandard (z. B. serieller Bus) festgelegte elektrische Signale und dergleichen.

Als fingierte Datensignale sind von der Steuereinrichtung erzeugte Datensignale zu verstehen, die für die am Eingangsanschlusspunkt angeschlossene Ladestation und/oder für das am Ausgangsanschlusspunkt angeschlossene Fahrzeug nicht von den Datensignalen unterscheidbar sind, die von der Ladestation und/oder vom Fahrzeug jeweils selbst erzeugt sind. Die dem Eingangsanschlusspunkt übertragenen fingierten Datensignale täuschen der mit dem Eingangsanschlusspunkt verbundenen Ladestation Datensignale des Fahrzeugs vor, die dem Ausgangsanschlusspunkt übertragenen fingierten Datensignale täuschen dem mit dem Ausgangsanschlusspunkt verbundenen Fahrzeug Datensignale der Ladestation vor.

Auf diese Weise kann die Steuereinrichtung aktiv in die Signalübertragung von der Ladestation zum Fahrzeug und/oder vom Fahrzeug zur Ladestation eingreifen und diese vorgeben. Die Signalübertragung kann mit den für elektrisch angetriebene Fahrzeuge üblichen Protokollen erfolgen, beispielsweise gemäß dem Typ 2-Standard oder ähnlicher Standards. Wird beispielsweise ein Ladevorgang beendet bzw. abgebrochen, bevor das Fahrzeug vollgeladen ist, gibt die Steuereinrichtung dem Fahrzeug mittels der fingierten Datensignale vor, eine Ladestation zu sein und beendet den Ladevorgang ordnungsgemäß. Dadurch werden im Fahrzeug potenzielle Fehlerzustände mit entsprechenden Fehlermeldungen vermieden. Da kein Fehlerzustand vorliegt, kann z. B. eine mechanische Verriegelung am Ausgangsanschlusspunkt seitens des Fahrzeugs automatisch gelöst werden.

Andererseits gibt die Steuereinrichtung, wenn der Ladevorgang beendet bzw. abgebrochen wird, bevor das Fahrzeug vollgeladen ist, der Ladestation mittels der fingierten Datensignale vor, ein Fahrzeug zu sein und beendet den Ladevorgang ordnungsgemäß. Dadurch werden in der Ladestation potenzielle Fehlerzustände mit entsprechenden Fehlermeldungen vermieden.

Der aktive Eingriff in die Signalübertragung durch die Steuereinrichtung mittels der fingierten Datensignale erfolgt bevorzugt nur, wenn dies erforderlich ist, d. h., wenn eine Unterbrechung des Ladevorgangs durch Unterbinden der Energieübertragung zwischen dem Eingangsanschlusspunkt und dem Ausgangsanschlusspunkt im Fahrzeug oder in der Ladestation zu einem Fehlerzustand der an dem Eingangsanschlusspunkt angeschlossenen Ladestation und/oder des am Ausgangsanschlusspunkt angeschlossenen Fahrzeugs führen könnte oder würde.

Unabhängig von vorausbestimmbaren Bedingungen für die Durchführung des Ladevorgangs, z. B. Ladezeitfenster, Ladedauer, Energie-/Ladungsmenge usw., wird dieser zuverlässig durchgeführt und Fehlerzustände im Fahrzeug und in der Ladestation werden vermieden.

Die Steuereinrichtung kann wenigstens einen Mikroprozessor, Mikrocontroller und dergleichen aufweisen, z. B. ESP32, ESP8266, RP2040 und dergleichen.

Die Schalteinrichtung kann zum Unterbrechen und Herstellen des Energieflusses zwischen dem Eingangsanschlusspunkt und dem Ausgangsanschlusspunkt beispielsweise Relais oder Halbleiterschalter (z. B. MOSFETs) aufweisen.

Vorteilhafte Ausführungsformen sehen vor, dass die Signalübertragungsschnittstelle wenigstens ein von der Steuereinrichtung steuerbares Schaltelement (beispielsweise Relais oder Halbleiterschalter wie FET, MOSFET o. ä.) aufweist, das die Signalübertragung in einem geschlossenen Schaltzustand zwischen dem Eingangsanschlusspunkt und dem Ausgangsanschlusspunkt unmittelbar ohne (aktive) Zwischenschaltung der Steuereinrichtung herstellt und die Signalübertragung in einem geöffneten Schaltzustand aktiv über die Steuereinrichtung leitet. Die direkte Signalübertragung ohne Zwischenschaltung der Steuereinrichtung gewährleistet eine verzögerungsfreie Durchleitung der Datensignale zwischen dem Eingangsanschlusspunkt und dem Ausgangsanschlusspunkt. Erst wenn die Steuereinrichtung fingierte Datensignale erzeugt und übertragen möchte, wird diese in signalübertragender Weise elektrisch an den Eingangsanschlusspunkt bzw. den Ausgangsanschlusspunkt angeschlossen. Gleichzeitig führt das Öffnen des Schaltelements automatisch zur Unterbrechung der direkten Signalübertragung zwischen dem Eingangsanschlusspunkt und dem Ausgangsanschlusspunkt, indem ein direkter Signalübertragungsweg zwischen beiden Anschlusspunkten über eine Signalleitung getrennt wird.

In anderen Ausführungsformen ist die Steuereinrichtung ferner ausgebildet, die Schalteinrichtung mittels einer Unterbrechungsanforderung in den über die Datenübertragungsschnittstelle empfangenen Daten in die geöffnete Betriebsstellung zu schalten. Beispielsweise kann ein laufender Ladevorgang über das entfernte Gerät (z. B. von einem Nutzer des Ladeadapters mit einem mobilen Endgerät/Smartphone) vorzeitig abgebrochen werden, um sicherheitsrelevante Funktionen zu gewährleisten und/oder ein zeitbasiertes Laden zu ermöglichen. Alternativ oder zusätzlich kann der Ladeadapter von einem Eigentümer der Ladestation über die Datenübertragungsschnittstelle gesperrt werden, um ein Laden während bestimmter Sperrzeiten zu unterbinden.

In wiederum anderen vorteilhaften Ausführungsformen weist der Ladeadapter eine Messeinrichtung auf, die ausgebildet ist, eine zwischen dem Eingangsanschlusspunkt und dem Ausgangsanschlusspunkt übertragene Energiemenge und/oder elektrische Leistung zu bestimmen und den/die bestimmten Wert(e) der Steuereinrichtung bereitzustellen. Beispielsweise kann die übertragene Leistung mittels Hallsensoren (Strom), alternativ Stromtransformator (Strom), sowie einem Analog-Digital-Wandler (Spannung) gemessen werden und daraus sowohl Wirkleistung, Blindleistung und Scheinleistung ermittelt werden, um eine korrekte und genaue Messung der Leistung zu gewährleisten.

Durch Wahl geeignet präziser Bauelemente der Messeinrichtung können Anforderungen aus Eichgesetzen erfüllt und die Messeinrichtung bzw. der Ladeadapter geeicht werden.

In weiteren bevorzugten Ausführungsformen ist die Steuereinrichtung ferner ausgebildet, eine maximal zu ladende Energiemenge in den über die Datenübertragungsschnittstelle empfangenen Daten zu erhalten und die Schalteinrichtung in die geöffnete Betriebsstellung zu schalten, wenn die mittels der Messeinrichtung bestimmte Energiemenge die maximal zu ladende Energiemenge erreicht oder überschreitet. Damit kann der Ladevorgang beendet werden, selbst wenn das Fahrzeug nicht vollgeladen ist. Eine dauerhafte Verbindung zum entfernten Gerät (z. B. zur Überwachung der übertragenen Energiemenge) ist nicht notwendig, da der Ladeadapter die übertragene Energiemenge mittels der Messeinrichtung selbst überwachen kann. Der Ladeadapter kann damit unabhängig von einer dauerhaften Datenübertragungsverbindung zum entfernten Gerät (z. B. Server) autark operieren.

Der Begriff "Energiemenge" wird hierin synonym zum Begriff "Ladungsmenge" verwendet.

In einer anderen bevorzugten Ausführungsformen ist die Steuereinrichtung ferner ausgebildet, die mittels der Messeinrichtung bestimmte übertragene Energiemenge über die Datenübertragungsschnittstelle an das entfernte Gerät zu übertragen, zum Beispiel zu Information- und/oder Abrechnungszwecken. So kann mittels des Ladeadapters ein automatisches Abrechnungssystem beispielsweise über eine Cloudanbindung (entferntes Gerät) realisiert werden. Die erstellten Abrechnungen können anschließend automatisch an weitere entfernte Geräte, z. B. einem Gerät des Nutzers und/oder des Eigentümers der Ladestation übermittelt werden.

In einer anderen Ausführungsform ist die Schalteinrichtung ferner ausgebildet, den Energiefluss von dem Eingangsanschlusspunkt zum Ausgangsanschlusspunkt auf eine vorbestimmbare maximale Ladeleistung zu begrenzen. Die tatsächlich übertragene Ladeleistung kann zum Beispiel von der Messeinrichtung bestimmt und von der Steuereinrichtung überwacht werden und ggfs. an die vorbestimmte maximale Ladeleistung angepasst werden. Ohne Rückkopplung der gemessenen tatsächlichen Ladeleistung durch die Messeinrichtung kann die maximale Ladeleistung alternativ durch entsprechende Konfiguration bzw. Steuerung der Schalteinrichtung mittels der Steuereinrichtung für den jeweiligen Ladevorgang gesteuert werden. Jedenfalls kann eine Ladestation, die zum Beispiel für eine Ladeleistung von 22 kW ausgelegt ist, als 11 kW-Ladestation genutzt werden, um eine Nutzung von unterschiedlichen Energiespeichern in zu ladenden Fahrzeugen zu optimieren und/oder ein zu schnelles Laden gezielt zu verhindern.

In bevorzugten Ausführungsformen ist die Steuereinrichtung ferner ausgebildet, die vorbestimmbare maximale Ladeleistung in den über die Datenübertragungsschnittstelle empfangenen Daten zu erhalten und/oder aus den über die Signalübertragungsschnittstelle übertragenen Datensignalen zu bestimmen. Im zweiten Fall kann die Steuereinrichtung ausgebildet sein, die Datensignale an der Signalübertragungsschnittstelle während der geschlossenen Betriebsstellung der Schalteinrichtung passiv "mitzuhören", ohne in die Signalübertragung aktiv einzugreifen. So kann der Ladeadapter das an den Ausgangsanschlusspunkt angeschlossene Fahrzeug bzw. seine maximal mögliche Ladeleistung automatisch erkennen. Eine missbräuchliche Verwendung des Ladeadapters bzw. der am Eingangsanschlusspunkt angeschlossenen Ladestation und/oder mögliche Gefahrensituationen durch Manipulation werden auf diese Weise sicher verhindert.

Weitere vorteilhafte Ausführungsformen sehen vor, dass der Ausgangsanschlusspunkt ein Ladekabel mit einem Stecker aufweist, der zur elektrischen Verbindung mit dem Fahrzeug ausgebildet ist. Ein herkömmliches Ladekabel, das für den Anschluss des Fahrzeugs mit den Ausgangsanschlusspunkt des Ladeadapters zu verbinden wäre, kann somit entfallen, da der Ladeadapter das Ladekabel selbst bereitstellt. Anders formuliert stellt diese Ausführungsform ein Ladekabel mit integriertem erfindungsgemäßen Ladeadapter dar.

Der Stecker des Ladekabels und/oder des Ausgangsanschlusspunkts und/oder des Eingangsanschlusspunkts können als Typ 1-Anschluss, Typ 2-Anschluss, CCS- oder Combo-Anschluss, Chademo-Anschluss, Supercharger-Anschluss oder einfach als SchuKo- oder CEE-Anschluss ausgebildet sein.

Des Weiteren ist Gegenstand der Erfindung ein Verfahren zum Laden eines elektrisch antreibbaren Fahrzeugs, insbesondere Kraftfahrzeugs, das die Schritte aufweist:
- Verbinden eines Eingangsanschlusspunkts für Datensignale und eingehende Energie elektrisch mit einer Ladestation,
- Verbinden eines Ausgangsanschlusspunkts für die Datensignale und ausgehende Energie elektrisch mit dem Fahrzeug,
- Umschalten einer zwischen dem Eingangsanschlusspunkt und dem Ausgangsanschlusspunkt geschalteten Schalteinrichtung von einer geöffneten Betriebsstellung, in welcher ein Energiefluss zwischen dem Eingangsanschlusspunkt und dem Ausgangsanschlusspunkt unterbunden wird, in eine geschlossenen Betriebsstellung, in welcher der Energiefluss von dem Eingangsanschlusspunkt zum Ausgangsanschlusspunkt zugelassen wird, basierend auf über eine Datenübertragungsschnittstelle zur Datenübertragung mit einem entfernten Gerät empfangenen Daten,
- Zulassen einer Signalübertragung der Datensignale zwischen dem Eingangsanschlusspunkt und dem Ausgangsanschlusspunkt über eine Signalübertragungsschnittstelle bei geschlossener Betriebsstellung und
- Unterbinden der Signalübertragung der Datensignale zwischen dem Eingangsanschlusspunkt und dem Ausgangsanschlusspunkt und Übertragen fingierter Datensignale mit dem Eingangsanschlusspunkt und/oder dem Ausgangsanschlusspunkt bei geöffneter Betriebsstellung.

Es ist zu verstehen, dass bezüglich verfahrensbezogener Begriffsdefinitionen sowie der Wirkungen und Vorteile verfahrensgemäßer Merkmale vollumfänglich auf die Offenbarung sinngemäßer Definitionen, Wirkungen und Vorteile des erfindungsgemäßen Ladeadapters zurückgegriffen werden kann und umgekehrt. Auf eine Wiederholung von Erläuterungen sinngemäß gleicher Merkmale, deren Wirkungen und Vorteile kann somit zugunsten einer kompakteren Beschreibung verzichtet werden, ohne dass derartige Auslassungen als Einschränkung für einen der offenbarten Erfindungsgegenstände auszulegen wären.

Weitere Merkmale und Vorteile der Erfindung ergeben sich aus der folgenden Beschreibung nicht einschränkend zu verstehender Ausführungsbeispiele der Erfindung, die im Folgenden unter Bezugnahme auf die Zeichnung näher erläutert wird. In dieser Zeichnung zeigen schematisch:
- Fig. 1: ein Funktionsdiagramm einer Ladesituation unter Verwendung eines Ladeadapters nach einer Ausführungsform der Erfindung; und
- Fig. 2: ein detaillierteres Funktionsdiagramm des Ladeadapters aus Fig. 1.

In den unterschiedlichen Figuren sind hinsichtlich ihrer Funktion gleich-wertige Teile stets mit denselben Bezugszeichen versehen, so dass diese in der Regel auch nur einmal beschrieben werden.

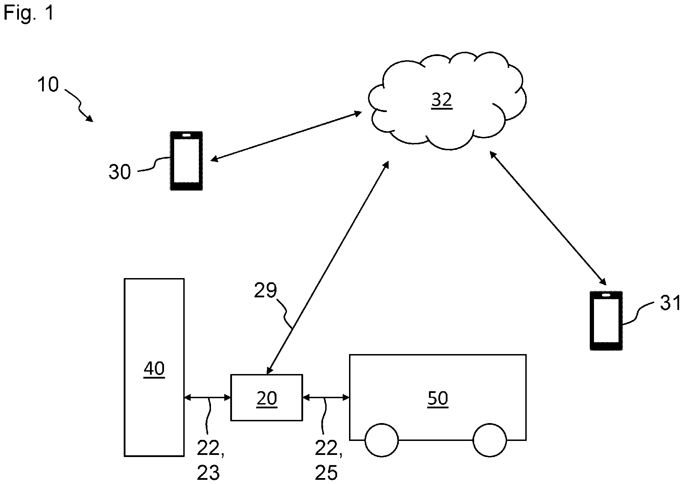

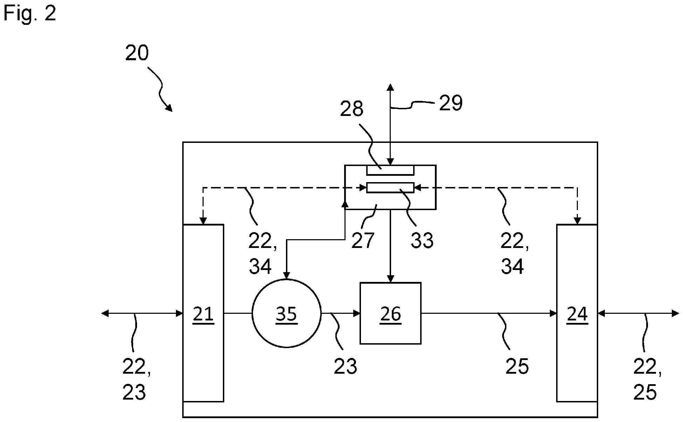

Fig. 1 stellt schematisch ein Funktionsdiagramm einer beispielhaften Ladesituation 10 unter Verwendung eines Ladeadapters 20 nach einer Ausführungsform der Erfindung dar. Fig. 2 stellt ein detaillierteres Funktionsdiagramm des Ladeadapter 20 aus Fig. 1 dar. Im Folgenden wird abwechselnd Bezug auf die Fig. 1 und 2 genommen.

Wie in Fig. 1 zu erkennen ist, verbindet der Ladeadapter 20 eine Ladestation 40 mit einem zu ladenden elektrisch antreibbaren Fahrzeug 50, vorliegend beispielhaft ein Kraftfahrzeug.

Fig. 2 ist zu entnehmen, dass der Ladeadapter 20 einen Eingangsanschlusspunkt 21 für Datensignale 22 und eingehende Energie 23 aufweist, der ausgebildet ist, elektrisch mit der Ladestation 30 verbunden zu werden. Des Weiteren weist er einen Ausgangsanschlusspunkt 24 für die Datensignale 22 und ausgehende Energie 25 auf, der ausgebildet ist, elektrisch mit dem Fahrzeug 40 verbunden zu werden. Weiter ist eine Schalteinrichtung 26 (z. B. Relais, Halbleiterschalter wie MOSFETs o. ä.) des Ladeadapters 20 zu erkennen, die zwischen dem Eingangsanschlusspunkt 21 und dem Ausgangsanschlusspunkt 24 geschaltet ist und ausgebildet ist, in einer geschlossenen Betriebsstellung einen Energiefluss von dem Eingangsanschlusspunkt 21 zum Ausgangsanschlusspunkt 24 zuzulassen und in einer geöffneten Betriebsstellung den Energiefluss zwischen dem Eingangsanschlusspunkt 21 und dem Ausgangsanschlusspunkt 24 zu unterbinden. Mit der Schalteinrichtung 26 ist eine Steuereinrichtung 27 (z. B. Mikroprozessor, Mikrocontroller o. ä.) gekoppelt, die eine Datenübertragungsschnittstelle 28 (z. B. kabelgebunden oder drahtlos) zur Übertragung von Daten 29 mit einem entfernten Gerät - vorliegend beispielhaft drei entfernte Geräte 30, 31 und 32 - und eine Signalübertragungsschnittstelle 33 zur Signalübertragung der Datensignale 22 mit dem Eingangsanschlusspunkt 21 und dem Ausgangsanschlusspunkt 24 aufweist.

In dem in Fig. 1 dargestellten Beispiel ist das erste entfernte Gerät 30 ein Endgerät (z. B. Smartphone, Tablet, Laptop, Server o. ä.) eines Eigentümers der Ladestation 40, das zweite entfernte Gerät 31 ein Endgerät, wie beispielsweise ein Smartphone, eines Nutzers des Fahrzeugs 50 bzw. des Ladeadapters 20 und das dritte entfernte Gerät 32 beispielhaft ein Cloud-, Internet-, Daten-, Abrechnungs-Server o. ä. Die entfernten Geräte 30 und 31 können mit dem entfernten Gerät 32 in datenübertragender Weise verbunden sein. Die entfernten Geräte 30 und/oder 31 können über die Datenübertragungsschnittstelle 28 mit dem Ladeadapter 20 Daten 29 übertragen.

Die Steuereinrichtung 27 ist ausgebildet, basierend auf den über die Datenübertragungsschnittstelle 28 empfangenen Daten 29 die Schalteinrichtung 26 zwischen der geöffneten Betriebsstellung und der geschlossenen Betriebsstellung umzuschalten und bei geschlossener Betriebsstellung die Signalübertragung zwischen dem Eingangsanschlusspunkt 21 und dem Ausgangsanschlusspunkt 24 über die Signalübertragungsschnittstelle 33 zuzulassen und bei geöffneter Betriebsstellung die Signalübertragung zwischen dem Eingangsanschlusspunkt 21 und dem Ausgangsanschlusspunkt 24 zu unterbinden. Bei unterbundener Signalübertragung übertragt die Steuereinrichtung 27 mit dem Eingangsanschlusspunkt 21 und/oder dem Ausgangsanschlusspunkt 24 stattdessen fingierte Datensignale, bevorzugt nur, wenn dies erforderlich ist, um Fehlerzustände in der Ladestation 40 und/oder im Fahrzeug 50 zu vermeiden (z. B. in Folge einer vorzeitigen Unterbrechung eines Ladevorgangs). Auf diese Weise kann die Steuereinrichtung 27 aktiv in die Signalübertragung eingreifen.

Die in Fig. 1 dargestellte Ladesituation 10 kann wie folgt beschrieben werden.

Der Eingangsanschlusspunkt 21 zur Übertragung der Datensignale 22 und der eingehenden Energie 23 wird mit der Ladestation 40 elektrisch verbunden.

Der Ausgangsanschlusspunkt zur Übertragung der Datensignale 22 und der ausgehenden Energie 25 wird mit dem elektrisch antreibbaren Fahrzeug 50 verbunden.

Die zwischen dem Eingangsanschlusspunkt 21 und dem Ausgangsanschlusspunkt 24 geschaltete Schalteinrichtung 26 wird basierend auf über die Datenübertragungsschnittstelle 28 von wenigstens einem der entfernten Geräte 30, 31, 32 empfangenen Daten von der geöffneten Betriebsstellung, in welcher der Energiefluss zwischen dem Eingangsanschlusspunkt 21 und dem Ausgangsanschlusspunkt 24 unterbunden wird, in die geschlossenen Betriebsstellung umgeschaltet, in welcher der Energiefluss von dem Eingangsanschlusspunkt 21 zum Ausgangsanschlusspunkt 24 zugelassen wird.

Während der geschlossenen Betriebsstellung der Schalteinrichtung 26 wird die Signalübertragung der Datensignale 22 zwischen dem Eingangsanschlusspunkt 21 und dem Ausgangsanschlusspunkt 24 über die Signalübertragungsschnittstelle 33 ungehindert zugelassen.

Bei geöffneter Betriebsstellung der Schalteinrichtung 26 werden die Signalübertragung der Datensignale 22 zwischen dem Eingangsanschlusspunkt 21 und dem Ausgangsanschlusspunkt 24 unterbunden und fingierte Datensignale 34 mit dem Eingangsanschlusspunkt 21 und/oder dem Ausgangsanschlusspunkt 24 übertragen, wenn dies zur Vermeidung von Fehlerzuständen in der Ladestation 40 und/oder im Fahrzeug 50 notwendig ist.

Die Signalübertragungsschnittstelle 33 kann wenigstens ein von der Steuereinrichtung 27 steuerbares Schaltelement (z. B. Halbleiterschalter, nicht dargestellt) aufweisen, das die Signalübertragung in einem geschlossenen Schaltzustand zwischen dem Eingangsanschlusspunkt 21 und dem Ausgangsanschlusspunkt 24 unmittelbar ohne Zwischenschaltung der Steuereinrichtung 27 herstellt und die Signalübertragung in einem geöffneten Schaltzustand aktiv über die Steuereinrichtung 27 leitet.

Der in Fig. 2 dargestellte beispielhafte Ladeadapter 20 weist vorliegend eine Messeinrichtung 35 auf. Diese ist ausgebildet, eine zwischen dem Eingangsanschlusspunkt 21 und dem Ausgangsanschlusspunkt 24 übertragene Energiemenge und/oder elektrische Leistung zu bestimmen und den bestimmten Wert der Steuereinrichtung 27 bereitzustellen.

In einer hier nicht dargestellten Variante des Ladeadapters 20 kann der Ausgangsanschlusspunkt 24 ein Ladekabel mit einem Stecker aufweisen, der zur elektrischen Verbindung mit dem Fahrzeug 40 ausgebildet ist. Das heißt, der Ladeadapter ist in einer solchen Ausgestaltung als integrierter Bestandteil eines Ladekabels zu verstehen.

Über die Daten 29 können der Steuereinrichtung 27 beispielsweise eine Startanforderung zum Schließen der Schalteinrichtung 26, eine Unterbrechungsanforderung zum Öffnen der Schalteinrichtung 26, eine maximal zu übertragende Energiemenge (Ladungsmenge), eine maximale Ladezeit und dergleichen übertragen werden. Die Steuereinrichtung 27 kann nach Abschluss des Ladevorgangs die tatsächlich übertragene Energiemenge (Ladungsmenge) über der Datenübertragungsschnittstelle 28 an wenigstens eines der entfernten Geräte 30, 31, 32 übertragen (z. B. zu Informations-/Abrechnungszwecken).

Das ladestationsseitige entfernte Gerät 30 kann über die Datenübertragungsschnittstelle 28 des Ladeadapters 20 beispielsweise Ladezeitfenster vorgeben, in denen ein Laden des Fahrzeugs 50 an der Ladestation 40 möglich sein soll. Außerhalb dieser Zeitfenster lässt der Ladeadapter 20 keinen Energiefluss zwischen dem Eingangsanschlusspunkt 21 und dem Ausgangsanschlusspunkt 24 an dieser Ladestation 40 zu.

Das fahrzeugseitige entfernte Gerät 31 kann über die Datenübertragungsschnittstelle 28 des Ladeadapters 20 beispielsweise eine bei einem Ladevorgang maximal zu übertragende Energiemenge (Ladungsmenge) bestimmen. Alternativ oder ergänzend zur Energiemenge kann das entfernte Gerät 31 eine maximale Ladezeit, einen maximalen Abrechnungsbetrag und dergleichen vorgeben, so dass der Ladeadapter 20 den Energiefluss zwischen dem Eingangsanschlusspunkt 21 und dem Ausgangsanschlusspunkt 24 automatisch unterbricht, wenn eines der vorbestimmten Kriterien erreicht bzw. überschritten wird.

Das entfernte Gerät 32 kann dem entfernten Gerät 31 außerdem Informationen über verfügbare Ladestationen 40 bereitstellen, z. B. in einer vorbestimmten Entfernung zum Gerät 31.

### Bezugszeichenliste

- 10: Ladesituation

- 20: Ladeadapter
- 21: Eingangsanschlusspunkt
- 22: Datensignale
- 23: Eingehende Energie
- 24: Ausgangsanschlusspunkt
- 25: Ausgehende Energie
- 26: Schalteinrichtung
- 27: Steuereinrichtung
- 28: Datenübertragungsschnittstelle
- 29: Daten
- 30: Erstes entferntes Gerät
- 31: Zweites entferntes Gerät
- 32: Drittes entferntes Gerät
- 33: Signalübertragungsschnittstelle
- 34: Fingierte Datensignale
- 35: Messeinrichtung

- 40: Ladestation

- 50: Elektrisch antreibbares Fahrzeug

## Patentansprüche

1. Ladeadapter (20) für eine Ladestation (40) für ein elektrisch antreibbares Fahrzeug (50), insbesondere Kraftfahrzeug, aufweisend einen Eingangsanschlusspunkt (21) für Datensignale (22) und eingehende Energie (23), der ausgebildet ist, elektrisch mit der Ladestation (40) verbunden zu werden, einen Ausgangsanschlusspunkt (24) für die Datensignale (22) und ausgehende Energie (25), der ausgebildet ist, elektrisch mit dem Fahrzeug (50) verbunden zu werden, eine Schalteinrichtung (26), die zwischen dem Eingangsanschlusspunkt (21) und dem Ausgangsanschlusspunkt (24) geschaltet ist und ausgebildet ist, in einer geschlossenen Betriebsstellung einen Energiefluss von dem Eingangsanschlusspunkt (21) zum Ausgangsanschlusspunkt (24) zuzulassen und in einer geöffneten Betriebsstellung den Energiefluss zwischen dem Eingangsanschlusspunkt (21) und dem Ausgangsanschlusspunkt (24) zu unterbinden, eine mit der Schalteinrichtung (26) gekoppelte Steuereinrichtung (27), die eine Datenübertragungsschnittstelle (28) zur Datenübertragung mit einem entfernten Gerät (30, 31, 32) und eine Signalübertragungsschnittstelle (33) zur Signalübertragung der Datensignale (22) mit dem Eingangsanschlusspunkt (21) und dem Ausgangsanschlusspunkt (24) aufweist, wobei die Steuereinrichtung (27) ausgebildet ist, basierend auf über die Datenübertragungsschnittstelle (28) empfangenen Daten (29) die Schalteinrichtung (26) zwischen der geöffneten Betriebsstellung und der geschlossenen Betriebsstellung umzuschalten und bei geschlossener Betriebsstellung die Signalübertragung der Datensignale (22) zwischen dem Eingangsanschlusspunkt (21) und dem Ausgangsanschlusspunkt (24) über die Signalübertragungsschnittstelle (33) zuzulassen und bei geöffneter Betriebsstellung die Signalübertragung der Datensignale (22) zwischen dem Eingangsanschlusspunkt (21) und dem Ausgangsanschlusspunkt (24) zu unterbinden und mit dem Eingangsanschlusspunkt (21) und/oder dem Ausgangsanschlusspunkt (24) fingierte Datensignale (34) zu übertragen.

2. Ladeadapter nach Anspruch 1, bei dem die Signalübertragungsschnittstelle (33) wenigstens ein von der Steuereinrichtung (27) steuerbares Schaltelement aufweist, das die Signalübertragung in einem geschlossenen Schaltzustand zwischen dem Eingangsanschlusspunkt (21) und dem Ausgangsanschlusspunkt (24) unmittelbar ohne Zwischenschaltung der Steuereinrichtung (27) herstellt und die Signalübertragung in einem geöffneten Schaltzustand über die Steuereinrichtung (27) leitet.

3. Ladeadapter nach Anspruch 1 oder 2, bei dem die Steuereinrichtung (27) ferner ausgebildet ist, die Schalteinrichtung (26) mittels einer Unterbrechungsanforderung in den über die Datenübertragungsschnittstelle (28) empfangenen Daten (29) in die geöffnete Betriebsstellung zu schalten.

4. Ladeadapter nach einem der vorhergehenden Ansprüche, der ferner eine Messeinrichtung (35) aufweist, die ausgebildet ist, eine zwischen dem Eingangsanschlusspunkt (21) und dem Ausgangsanschlusspunkt (24) übertragene Energiemenge und/oder elektrische Leistung zu bestimmen und der Steuereinrichtung (27) bereitzustellen.

5. Ladeadapter nach Anspruch 4, bei dem die Steuereinrichtung (27) ferner ausgebildet ist, eine maximal zu ladende Energiemenge in den über die Datenübertragungsschnittstelle (28) empfangenen Daten (29) zu erhalten und die Schalteinrichtung (26) in die geöffnete Betriebsstellung zu schalten, wenn die mittels der Messeinrichtung (35) bestimmte Energiemenge die maximal zu ladende Energiemenge erreicht oder überschreitet.

6. Ladeadapter nach Anspruch 4 oder 5, bei dem die Steuereinrichtung (27) ferner ausgebildet ist, die mittels der Messeinrichtung (35) bestimmte übertragene Energiemenge über die Datenübertragungsschnittstelle (28) an das entfernte Gerät (30, 31, 32) zu übertragen.

7. Ladeadapter nach einem der vorhergehenden Ansprüche, bei dem die Schalteinrichtung (26) ferner ausgebildet ist, den Energiefluss von dem Eingangsanschlusspunkt (21) zum Ausgangsanschlusspunkt (24) auf eine vorbestimmbare maximale Ladeleistung zu begrenzen.

8. Ladeadapter nach dem vorhergehenden Anspruch, bei dem die Steuereinrichtung (27) ferner ausgebildet ist, die vorbestimmbare maximale Ladeleistung in den über die Datenübertragungsschnittstelle (28) empfangenen Daten (29) zu erhalten und/oder aus den über die Signalübertragungsschnittstelle (33) übertragenen Datensignalen (22) zu bestimmen.

9. Ladeadapter nach einem der vorhergehenden Ansprüche, bei dem der Ausgangsanschlusspunkt (24) ein Ladekabel mit einem Stecker aufweist, der zur elektrischen Verbindung mit dem Fahrzeug (40) ausgebildet ist.

10. Verfahren zum Laden eines elektrisch antreibbaren Fahrzeugs (50), insbesondere Kraftfahrzeugs, aufweisend die Schritte:
- Verbinden eines Eingangsanschlusspunkts (21) für Datensignale (22) und eingehende Energie (23) elektrisch mit einer Ladestation (40),
- Verbinden eines Ausgangsanschlusspunkts (24) für die Datensignale (22) und ausgehende Energie (25) elektrisch mit dem Fahrzeug (50),
- Umschalten einer zwischen dem Eingangsanschlusspunkt (21) und dem Ausgangsanschlusspunkt (24) geschalteten Schalteinrichtung (26) von einer geöffneten Betriebsstellung, in welcher ein Energiefluss zwischen dem Eingangsanschlusspunkt (21) und dem Ausgangsanschlusspunkt (24) unterbunden wird, in eine geschlossenen Betriebsstellung, in welcher der Energiefluss von dem Eingangsanschlusspunkt (21) zum Ausgangsanschlusspunkt (24) zugelassen wird, basierend auf über eine Datenübertragungsschnittstelle (28) zur Datenübertragung mit einem entfernten Gerät (30, 31, 32) empfangenen Daten (29),
- Zulassen einer Signalübertragung der Datensignale (22) zwischen dem Eingangsanschlusspunkt (21) und dem Ausgangsanschlusspunkt (24) über eine Signalübertragungsschnittstelle (33) bei geschlossener Betriebsstellung und
- Unterbinden der Signalübertragung der Datensignale (22) zwischen dem Eingangsanschlusspunkt (21) und dem Ausgangsanschlusspunkt (24) und Übertragen fingierter Datensignale (34) mit dem Eingangsanschlusspunkt (21) und/oder dem Ausgangsanschlusspunkt (24) bei geöffneter Betriebsstellung.
